## Europäisches Patentamt

## European Patent Office

## Office européen des brevets

(11) Publication number: **0 213 088**
**B1**

# EUROPEAN PATENT SPECIFICATION

(45) Date of publication of patent specification: **19.09.90**

(51) Int. Cl.⁵: **A 21 C 3/06**

(21) Application number: **86830201.9**

(22) Date of filing: **15.07.86**

(54) **An automatic machine for coiling pieces of rolled pastry.**

(30) Priority: **31.07.85 IT 4008285**

(43) Date of publication of application:
**04.03.87 Bulletin 87/10**

(45) Publication of the grant of the patent:
**19.09.90 Bulletin 90/38**

(84) Designated Contracting States:
**AT BE CH DE FR GB LI LU NL SE**

(56) References cited:
**FR-A- 693 102**
**FR-A- 926 325**
**GB-A- 218 395**
**US-A-2 784 683**

(73) Proprietor: **ITALGEL S.P.A.**
**Viale Mentana, 43**
**I-43100 Parma (IT)**

(72) Inventor: **Antiga, Rinaldo**
**Via Montanara 467**
**Località Carignano I-43100 Parma (IT)**

(74) Representative: **Lanzoni, Luciano**
**c/o BUGNION S.p.A. Viale Trento Trieste, 25**
**I-41100 Modena (IT)**

Courier Press, Leamington Spa, England.

## Description

The invention relates to an automatic machine for coiling pieces of rolled pastry.

In the food industry, pastry of various kinds, pizza dough, and similar products, are currently offered for sale in frozen packs, rolled up into coils both for the convenience of the user and in order to make for easy packaging. Hitherto, the single pieces of rolled pastry have been coiled by hand, with the aid of a special fork that speeds up the manual process in some measure.

It's known in the art a machine, described in the French Patent No. 926 325, which comprises a feed conveyor for carrying the pieces of pastry to means for coiling the piece of rolled pastry, under which means is located an evacuating conveyor. The relative position between the feed conveyor and the evacuating conveyor is fixed and the coiled piece of pastry falls down for gravity on the evacuating conveyor squashing in the case of the soft pastry as puff pastry.

The coiling means of the piece of pastry comprise two rollers so positioned to press the piece of pastry during the coiling process.

This machine is characteristic for the bread preparation.

The object of the invention described herein is that of providing a mechanized, automatic operation by means of which flat pieces of pastry of any shape, circular, rectangular, etc., and whatever thickness, can be rolled up into coils.

A further object of the invention is that of providing an operation whereby the pastry can be coiled more or less tightly according to its composition and thickness, and covered at the same time with a sheet of paper.

The stated objects are fully realized with an automatic machine, according to the invention, comprising: movable conveyor means for carrying the single pieces of rolled pastry to be coiled, which alternate between an infeed position and a runout position; means for coiling the pieces of rolled pastry in a direction inverse to that in which they travel along the movable conveyor means, with which the movable conveyor means are aligned when occupying the infeed position; mean for detecting the coiled state of the piece of rolled pastry and producing transfer of the movable conveyor means from the infeed position to the runout position; and conveyor means for removal of the single pieces of rolled pastry once coiled, with which the movable conveyor means are disposed substantially in alignment when occupying the runout position. An automatic machine according to the invention is preferably characterized further in that the means for coiling the pieces of rolled pastry comprise a set of clockwise-rotating power driven rollers the axes of which are disposed parallel with one another and coincident wiht the vertices of a polygon, thereby creating a gap between the rollers for accommodation of the piece of rolled pastry when coiled. The crest of a first roller of such a set is disposed substantially in alignment with the movable conveyor means when these occupy the infeed position, and at lesat one of the remaining rollers of the set, situated above the first roller, is pivotably mounted so as to pivot about an axis parallel to and located above those of the clockwise-rotating power driven rollers.

An embodiment of the invention will now be described in detail, by way of example, with the aid of the accompanying drawings, in which:

Fig. 1 is a perspective showing the machine in its entirety;

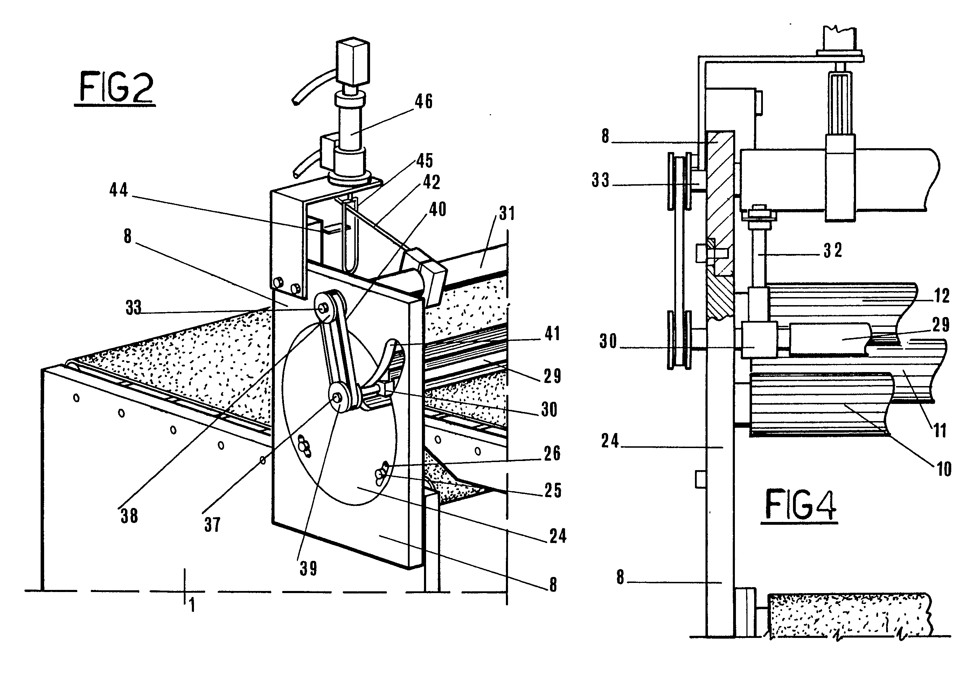

Fig. 2 is the perspective of a part of the machine;

Fig. 3 is a side elevation of the machine plotted through III-III in Fig. 1;

Fig. 4 is a transverse section illustrating how the rollers of the machine are journalled.

With reference to the drawings, 1 denotes the main frame by which all component parts of the machine are carried; according to the invention, the machine can be considered as comprising four basic assemblies.

2 denotes movable conveyor means mounted to the main frame 1, upon which single pieces of rolled pastry 3 are either positioned by hand, or deposited by the automatic equipment of incoming supply or production lines.

The movable conveyor means 2 consist substantially in a belt loop 4 of PVC, or other similar material, which is passed around a power-driven roller 5. The belt loop 4 and the drive roller 5 are mounted to a frame 6 that is hinged such as to rotate about the axis of the drive roller 5 when actuated by a pneumatic or hydraulic cylinder 7.

8 denotes two plates integral with the main frame 1, to which means 9 are mounted that coil the pieces of rolled pastry singly; such means 9 consist of three power-driven rollers 10, 11 and 12, which are of identical diameter and faced with rubber. The three rollers are driven by a motor-variator 13 mounted to a bracket 14 integral with the main frame 1, the output shaft of which carries a keyed pulley 15 that transmits rotation through a belt 16 looped around a further pulley 17 keyed to the shaft 18 of the roller denoted 12; an additional pulley 19 keyed to the same shaft 18 drives a belt 20 looped around two further pulleys 21 and 22 which are keyed to the remaining rollers 10 and 11, respectively.

23 denotes a conventional tension wheel in contact with the belt denoted 20, which is fitted such that all three rollers 10, 11 and 12 rotate in the clockwise direction.

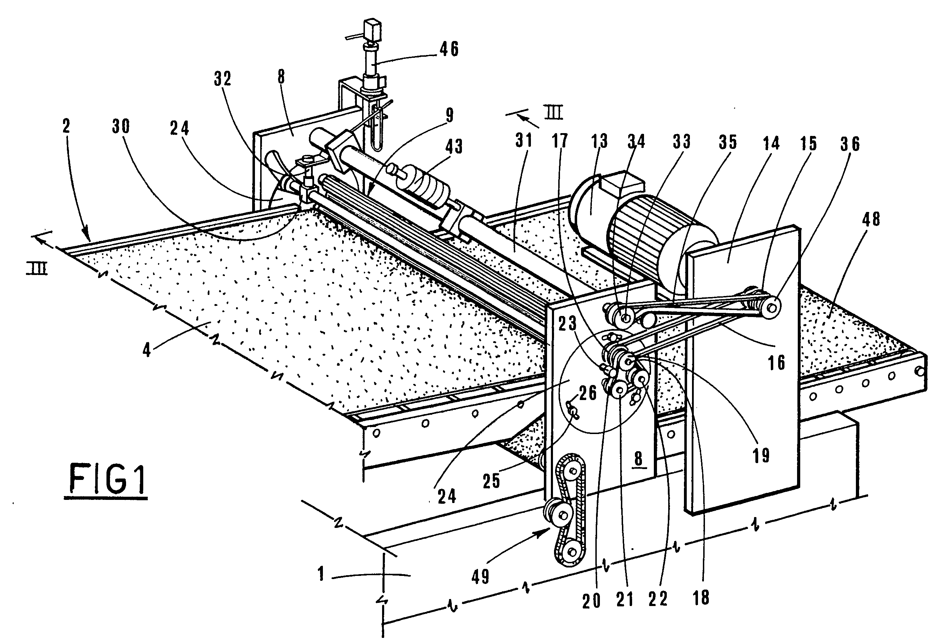

The rollers are journalled to the circular plates 24 set into the frame plates 8 and made fast thereto by way of bolts 25. Each circular plate 24 is provided with slots 26 arranged about a circumference centred on the first roller 10, the axis of which coincides with the centre of the ciruclar plate; a bolt 25 is inserted through each such slot 26, and engages a respective hole tapped in the frame plate 8. The first roller 10 is positioned so as to lie substantially tangential to the belt loop 4 when the movable conveyor means occupy the infeed position illustrated in Fig. 1; the remaining two rollers 11 and 12 are set apart at a distance such that the axes of the three rollers describe an isosceles triangle, for all practical intents and purposes, the effect of which is to create a gap 27 into which the piece of pastry 3 is directed when rolling up into a coil, a procedure shortly to be described.

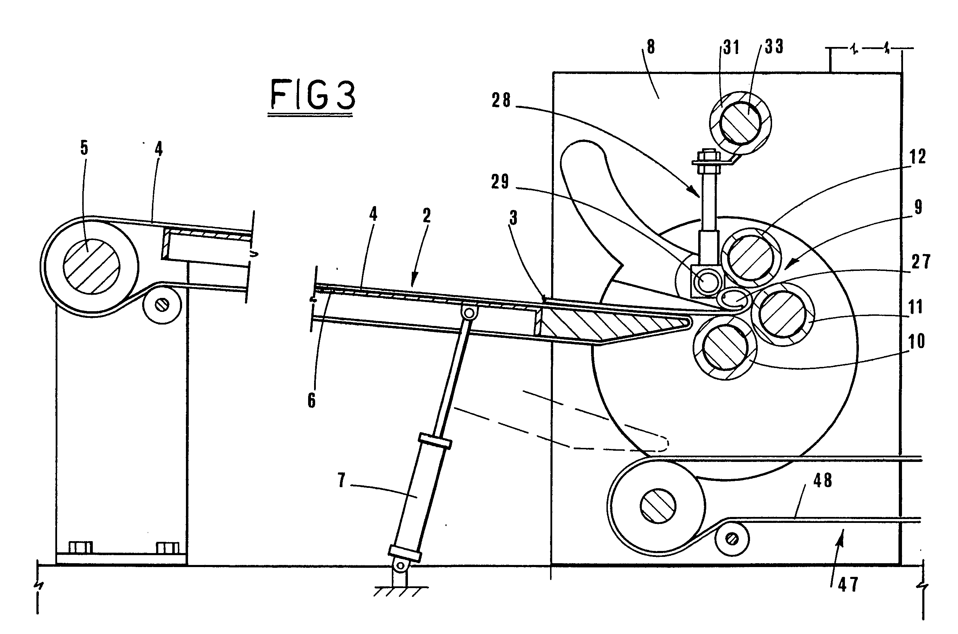

28 denotes means, located in a position forward of the three rollers, which detect the coiled state of the piece of pastry 3 and trigger operation of the cylinder 7 that moves the belt loop 4 into the runout position illustrated in Fig. 3 (broken line). The means 28 in question consist essentially in a pivoted power-driven roller 29 journalled to a pair of bosses 30 that are attached to a bar 31 by way of adjustable screw fittings 32; the bar 31 itself is rotatable about its own axis, and to that end, provided with a bore which accommodates a power-driven pivot shaft 33.

The pivot shaft 33 is turned by a pulley 34, driven by a belt 35 looped around a further pulley 36 keyed to the motor-variator 13, and transmits rotation in its turn to a further shaft 37 inserted through the pivoted roller 29 by way of additional pulleys 38 and 39 and a relative belt 40.

41 denotes a slot in the frame plate 8 provided to allow rotation of the roller 29 about the axis of the bar 31.

42 and 43 denote a rod and an adjustable counterpoise, respectively, both of which are mounted to the bar 31, the rod 42 is positioned such as to engage a microswitch 44, and locates in a parallel link 45 that moves through a vertical path when operated by a pneumatic or hydraulic cylinder 46.

Situated beneath the means 9 by which single pieces of pastry are coiled, one has further means 47 for conveying the rolled-up pieces out of the machine, consisting substantially in a belt loop 48 turned by a chain drive 49 through which power is transmitted by a geared motor not shown in the drawings.

Operation of the machine is as follows.

Pieces of rolled pastry to be coiled arrive from a previous manufacturing process and are brought onto the belt loop 4, which occupies the infeed position shown in Fig. 3. The piece of pastry is thus fed directly into the gap 27 existing between the rollers 10, 11 and 12, and forced by their rotary action to wind into a coil, rolling up in the opposite direction to that in which it travels along the belt.

Rolling up gradually into a coil and thus increasing in diameter, the piece of pastry urges the pivoted roller 29 outwards, causing it to rotate about the bar 31 to the point where the rod 42 strikes against the microswitch 44. In practical application, needless to say, the position of the rod 42 when striking will be calculated to coincide with completion of the coiling process.

Engagement of the microswitch 4 triggers operation of the cylinder 7 attached to the movable conveyor means, resulting in transfer of the belt loop 4 from the infeed to the runout position.

Engagement of the microswitch 44 also triggers the excitation of solenoid valves controlling the cylinder attached to the parallel link 45, which is thus raised in order to return the pivoted roller 29 to its initial position, thereby favouring descent of the coiled piece of pastry onto the belt loop 48 beneath, and to prevent descent of the rod 42.

Following a short lapse dictated by a conventional timer (not illustrated), the parallel link 45 is lowered by the cylinder 46, leaving the rod 42 free to rotate with the bar 31 under the influence of the counterpoise 43, which is adjustable, it will be remembered, and serves additionally to regulate the degree of pressure exerted on the coiling pastry by the weight of the pivoted roller 29.

Adjustment of the machine to variation in thickness of the pieces of rolled pastry, and for the purposes of obtaining a tighter or looser coiling action, is obtained by rotation of the circular plates 24 about their axis; since the axis of the plates coincides with the axis of rotation of the first roller 10, this has the effect of drawing or distancing the remaining rollers 11 and 12 closer to or further from the pivoted roller 29, thereby altering the effect produced by the set of rollers working in concert. A further adjustment, given by the counterpoise 43, is that of increasing or lessening pressure exerted on the piece of pastry by the weight of the pivoted roller 29; at all events, any such adjustment must be made in a manner that will allow smooth movement of the roller 29 in response to the growing diameter of the coil, without the pastry becoming squashed.

## Claims

1. An automatic machine for coiling pieces of rolled pastry, comprising:
   movable conveyor means (2) for carrying the single pieces of rolled pastry to be coiled, which alternate between an infeed position and a runout position;
   means (9) for coiling the pieces of rolled pastry in a direction inverse to that in which they travel along the movable conveyor means (2), with which the movable conveyor means (2) are aligned when occupying the infeed position;
   means (28) for detecting the coiled state of the piece of rolled pastry and producing transfer of the movable conveyor means (2) from the infeed position to the runout position; and
   conveyor means (47) for removal of the single pieces of rolled pastry once coiled, with which the movable conveyor means (2) are disposed substantially in alignment when occupying the runout position.

2. Automatic machine as in claim 1, wherein the movable conveyor means (2) carrying single pieces of rolled pastry to be coiled comprise a belt loop (4) mounted to a hinged frame (6) which is rotatable about an axis disposed perpendicular to the direction in which the pieces of pastry travel along the conveyor and substantially in alignment with the surface of the belt loop, and a pneumatic cylinder (7) attached to the hinged frame, by means of which the belt loop may be alternated between the infeed position and the runout position.

3. Automatic machine as in claim 1, wherein means (9) for coiling pieces of rolled pastry comprise a set of clockwise-rotating power driven rollers (10, 11, 12, 29) the axes of which are disposed parallel with one another and coincident with the vertices of a polygon, thereby creating a gap between the rollers for accommodation of the piece of rolled pastry to be coiled, and wherein the crest of a first roller (10) of the set is disposed substantially in alignment with the belt loop (4) when the movable conveyor means (2) occupy the infeed position, and the remaining rollers of the set comprise at least one pivoted roller (29) situated above said first roller (10) and pivotable about an axis parallel to and located above those of the clockwise-rotating power driver rollers (10, 11, 12, 29).

4. Automatic machine as in claim 1, wherein conveyor means (47) for removal of the single pieces of rolled pastry once coiled comprise a belt loop (47), located beneath the means (9) by which coiling is effected, with which the movable conveyor means (2) are disposed substantially in alignment when occupying the runout position.

5. Automatic machine as in claims 1 and 3, wherein means (28) for detecting the coiled state of a piece of pastry consists essentially in a pivoted roller (29) positioned above said first roller (10), and a microswitch (44) operated by the pivoted roller (29), the purpose of which is to trigger the control circuit of the pneumatic cylinder associated with the movable conveyor means (2).

6. Automatic machine as in claim 3, wherein said set of of clockwise-rotating power driven rollers is journalled to a frame that incorporates plates (24) which can be rotated about the axis of said first roller (10) to the end of altering the position of remaining rollers of said set in relation to said first roller (10).

7. Automatic machine as in claim 3, comprising four power-driven rollers the axes of which are disposed coincident with the vertices of a quadrilateral.

8. Automatic machine as in claim 3, comprising four power-driven rollers the axes of which are disposed coincident with the vertices of a right trapezium.

9. Automatic machine as in claim 3, comprising four power-driven rollers three of which, including said first roller (10), exhibit identical diameter, wherein the diameter of the pivoted roller (29) is smaller than that of said first roller (10).

**Patentansprüche**

1. Automatische Vorrichtung zum Wickeln von Stücken ausgerollten Teiges, enthaltend wie folgt:

Bewegliche Fördermittel (2) zum Zuführen der einzelnen zu wickelnden Stücke von Teig, die zwischen einer Beschickungs- und einer Abtransportposition wechseln;

Mittel (9) zum Wickeln der Stücke von ausgerolltem Teig in umgekehrter Richtung zu der, in welcher sie entlang der beweglichen Fördermittel (2) vorlaufen, und der die beweglichen Fördermittel (2) ausgerichtet sind, wenn sie die Beschickungsposition einnehmen;

Mittel (28), die den aufgewickelten Zustand der Stücke ausgerollten Teiges abtasten und den Übergang der beweglichen Fördermittel (2) aus der Beschickungsposition in die Abtransportposition bewirken; und

Fördermittel (47) zum Entfernen der einzelnen, gerade gewickelten Stücke ausgerollten Teiges, welche im wesentlichen zu den beweglichen Fördermitteln (2) ausgerichtet angeordnet sind, wenn diese die Abtransportposition einnehmen.

2. Automatische Vorrichtung nach Patentanspruch 1, dadurch gekennzeichnet, dass die die einzelnen Stücke ausgerollten Teiges tragenden beweglichen Fördermittel (2) ein Transportband (4) enthalten, das auf einem angelenkten Rahmen (6) montiert ist, welcher um eine Achse drehbar ist, die sich rechtwinklig zu der Richtung angeordnet befindet, in der die Teigstücke entlang dem Transportband vorlaufen, und der im wesentlichen zu der Überfläche des Transportbandes ausgerichtet ist, sowie einen an dem angelankten Rahmen befestigten Druckluftzylinder (7), durch den das Transportband abwechselnd in der Beschickungsposition und in der Abtransportposition angeordnet werden kann.

3. Automatische Vorrichtung nach Patentanspruch 1, dadurch gekennzeichnet, dass die Mittel (9) zum Wickeln der Stücke ausgerollten Teiges einen Satz von sich in Uhrzeigerrichtung drehenden angetriebenen Rollen (10, 11, 12, 29) enthälten, deren Achsen parallel zueinander angeordnet sind und mit den Spitzen eines Polygons übereinstimmen, wobei zwischen den Rollen ein Raum gebildet wird, um die zu wickelnden ausgerollten Stücke Teiges aufzunehmen, und dadurch, dass die Oberseite einer ersten Rolle (10) des Satzes im wesentlichen zu dem Transportband (4) ausgerichtet ist, wenn die beweglichen Fördermittel (2) die Beschickungsposition einnehmen, und wobei die verbleibenden Rollen des Satzes wenigstens eine Rolle (29) enthalten, die oberhalb der genannten ersten Rolle (10) gelagert und drehbar um eine Achse parallel zu und angeordnet über den sich in Uhrzeigerrichtung drehenden angetriebenen Rollen (10, 11, 12, 29) ist.

4. Automatische Vorrichtung nach Patentanspruch 1, dadurch gekennzeichnet, dass die Fördermittel (47) zum Entfernen der einzelnen, gerade gewickelten Stücke Teiges ein Transportband (48) enthalten, das unterhalb der Mittel (9) angeordnet ist, durch die das Wickeln erfolgt, und zu dem die beweglichen Fördermittel (2) im wesentlichen ausgerichtet sind, wenn diese die Abtransportposition einnehmen.

5. Automatische Vorrichtung nach den Patentansprüche 1 und 3, dadurch gekennzeichnet, dass die Mittel (28) zum Abtasten des gewickelten Zustandes eines Stückes von Teig hauptsächlich aus einer drehbar angelenkten Rolle (29) bestehen, die oberhalb der genannten ersten Rolle (10) angelenkt ist, sowie aus einem durch die angelenkte Rolle (29) betätigten Mikroschalter (44), dessen Aufgabe es ist, den Steuerkreis des mit den beweglichen Fördermitteln (2) verbundenen Druckluftzylinders auszulösen.

6. Automatische Vorrichtung nach Patentanspruch 3, dadurch gekennzeichnet, dass der genannte Satz der sich in Uhrzeigerrichtung drehenden angetriebenen Rollen in einem Rahmen gelagert ist, welcher Bleche (24) enthält, die um die Achse der genannten ersten Rolle (10) gedreht werden können, und zwar zu dem Zweck, die Position der verbleibenden Rollen des genannten Satzes im Verhaltnis zu der genannten ersten Rolle (10) zu verändern.

7. Automatische Vorrichtung nach Patentanspruch 3, dadurch gekennzeichnet, dass sie vier angetriebene Rollen enthält, deren Achsen übereinstimmend mit den Spitzen eines Viereckes angeordnet sind.

8. Automatische Vorrichtung nach Patentanspruch 3, dadurch gekennzeichnet, dass sie vier angetriebene Rollen enthält, deren Achsen übereinstimmend mit den Spitzen eines rechtwickligen Trapezes angeordnet sind.

9. Automatische Vorrichtung nach Patentanspruch 3, dadurch gekennzeichnet, dass sie vier angetriebene Rollen enthält, von drei, einschliesslich der genannten ersten Rolle (10), den gleichen Durchmesser aufweisen, und dadurch, dass der Durchmesser der angelenkten Rolle (29) geringer ist als der der genannten Rolle (10).

## Revendications

1. Appareil automatique pour enrouler les morceaux de pâte enroulée, comprenant:

des moyens transporteurs mobiles (2) pour transporter les morceaux individuels de pâte enroulée qui doivent êntre enroulés, ces moyens se déplaçant alternativement entre une position d'alimentation et une position d'évacuation;

des moyens (9) pour enrouler les morceaux de pâte enroulée selon une direction contraire à leur direction d'avance le long des moyens transporteurs mobiles (2) et avec lesquels les moyens transporteurs mobiles (2) sont alignés quand ils occupent la position d'alimentation;

des moyens (28) pour détecter la condition enroulée du morceau de pâte enroulée et commander le transfert des moyens transporteurs mobiles (2) de la position d'alimentation à la position d'évacuation; et

des moyens transporteurs (47) pour enlever chaque morceau individuel de pâte enroulée après son enroulement et avec lesquels les moyens transporteurs mobiles (2) sont disposés sensiblement en alignement quand ils occupant la position d'évacuation.

2. Appareil automatique selon la revendication 1, dans lequel les moyens transporteurs mobiles (2) qui transportent les morceaux individuels de pâte enroulée qui doivent être enroulés comportent un tapis roulant (4) supporté par un bâti articulé (6) qui est mobile à rotation autour d'un axe disposé perpendiculairement à la direction d'avance des morceaux de pâte le long du transporteur et sensiblement en alignement avec la surface du tapis roulant, et un cylindre penumatique (7) attaché au bâti articulé, au moyen duquel le tapis roulant peut être mû alternativement entre la position d'alimentation et la position d'évacuation.

3. Appareil automatique selon la revendication 1, dans lequel les moyens (9) pour enrouler les morceaux de pâte enroulée comportent une série de rouleaux (10, 11, 12, 29) entraînés par un moteur et tournant dans le sens des aiguilles d'une montre, dont les axes sont disposés parallèles entre eux et coïncident avec les sommets d'un polygone, de manière à créer un espace vide entre les rouleaux pour le logement du morceau de pâte enroulée qui doit être enroulé, et dans lequel la crête d'un premier rouleau (10) de la série est disposée sensiblement en alignement avec le tapis roulant (4) quand les moyens transporteurs mobiles (2) occupent la position d'alimentation, et les autres rouleaux de la série comportent au moins un rouleau à pivotement (29) situé au-dessus dudit premier rouleau (10) et susceptible de pivoter autour d'un axe parallèle à et disposé au-dessus de ceux des rouleaux entraînés (10, 11, 12, 29) tournant dans le sens des aiguilles d'une montre.

4. Appareil automatique selon la revendication 1, dans lequel les moyens transporteurs (47) pour l'enlèvement des morceaux individuels de pâte enroulée après leur enroulement comportent un tapis roulant (48), situé audessous des moyens (9) qui effectuent l'enroulement des morceaux, ces moyens étant disposés sensiblement en alignement avec les moyens transporteurs mobiles (2) quand ils occupent la position d'évacuation.

5. Appareil automatique selon les revendications 1 et 3, dans lequel les moyens (28) pour détecter la condition enroulée d'un morceau de pâte se composent essentiellement d'un rouléau à pivotement (29) situé audessus dudit premier rouleau (10), et d'un microinterrupteur (44) mis en fonctionnement par le rouleau à pivotement (29) et destiné à déclencher le circuit de commande du cylindre pneumatique associé avec les moyens transporteurs mobiles (2).

6. Appareil automatique selon la revendication 3, dans lequel ladite série de rouleaux entraînés tournant dans le sens des aiguilles d'une montre est supportée par un bati incorporant des plaques (24) qui peuvent tourner autour de l'axe dudit premier rouleau (10) dans le but de modifier la position des autres rouleaux de ladite série par rapport audit premier rouleau (10).

7. Appareil automatique selon la revendication 3, comprenant quatre rouleaux entraînés dont les axes sont disposés en coïncidence avec les sommets d'un quadrilatère.

8. Appareil automatique selon la revendication 3, comprenant quatre rouleaux entraînés dont les axes sont disposés en coïncidence avec les sommets d'un trapèze rectangle.

9. Appareil automatique selon la revendication 3, comprenant quatre rouleaux entraînés, dont trois, y compris ledit premier rouleau (10), ont le même diamètre, où le diamètre du rouleau à pivotement (29) est plus petit que celui dudit premier rouleau (10).

FIG1

FIG4

FIG2

2

# FIG 3

EP 0 213 088 B1